# EUROPEAN PATENT APPLICATION

(11) **EP 4 458 444 A1**
(43) Date of publication of application: **06.11.2024**
(21) Application number: 22915966.0
(22) Date of filing: 23.12.2022
(51) Int. Cl.: B01D 19/00, B01D 61/00, B01D 63/02

(54) **DEGASSING MODULE AND METHOD FOR DEGASSING LIQUID**

(30) Priority: 28.12.2021 JP 2021213996
(71) Applicant: DIC Corporation, Tokyo 174-8520 (JP)
(72) Inventor: YAMAMOTO Wataru, Ichihara-shi, Chiba 290-8585 (JP); OI Kazumi, Ichihara-shi, Chiba 290-8585 (JP); MORINO Akinori, Ichihara-shi, Chiba 290-8585 (JP); NARA Ryuta, Ichihara-shi, Chiba 290-8585 (JP)
(74) Representative: TBK
(86) International application number: PCT/JP2022/047699
(87) International publication number: WO 2023/127743

(57) **Abstract**

A degassing module includes: a pipe including an in-pipe flow path having a liquid supply port and a liquid discharge port, the pipe having a plurality of holes that allow the in-pipe flow path to be open; a hollow fiber membrane group formed by winding hollow fiber membrane fabric around an outer circumferential side of the pipe so as to cover the plurality of holes, the hollow fiber membrane fabric having a plurality of hollow fiber membranes serving as wefts, and warps; a housing connected to an outer circumferential surface of the pipe and configured to store the hollow fiber membrane group; a partition unit configured to partition a region in the housing into an internal region including an inner circumferential side space of each of the plurality of hollow fiber membranes, and an external region including an inter-membrane space between the plurality of hollow fiber membranes; an air intake port of the housing, the air intake port communicating with the internal region; and a baffle configured to partition the in-pipe flow path and the inter-membrane space in an extending direction of the pipe. The ratio of a diameter of each of the warps to a diameter of each of the plurality of hollow fiber membranes is 0.6 or higher.

## Description

### Technical Field

An aspect of the present invention relates to a degassing module that degasses liquid and a method of degassing liquid.

### Background Art

A degassing module that degasses liquid using a plurality of hollow fiber membranes has been conventionally known. For example, the contactor described in PTL 1 is known as a degassing module like this. The contactor described in PTL 1 includes: a pipe with open holes; a plurality of hollow fiber membranes surrounding the pipe; a baffle that changes the direction of the flow of liquid; a tube sheet that fixes the ends of the plurality of hollow fiber membranes to the pipe; a shell that stores the plurality of hollow fiber membranes; and an air intake port formed in the shell. In this contactor, when liquid is supplied to the pipe, the liquid flows out from the pipe upstream of the baffle, passes through the inter-membrane space between the plurality of hollow fiber membranes, flows through between the baffle and the shell, and subsequently, passes through the inter-membrane space between the plurality of hollow fiber membranes, and flows into the pipe again downstream of the baffle. In this process, the inner cavity of the hollow fiber membranes is vacuum-sucked through the air intake port, thus the entrained gas in the liquid is moved to the inner cavity-side of the hollow fiber membranes, and the liquid is degassed. The degassed liquid is then discharged from the pipe.

### Citation List

### Patent Literature

PTL 1: Japanese Unexamined Patent Application Publication No. 2003-038904

### Summary of Invention

### Technical Problem

As in the contactor described in PTL 1, providing the degassing module with a baffle can improve the degassing performance of the degassing module. In particular, the effect is significant for a large-sized degassing module.

However, with the contactor described in PTL 1, the plurality of hollow fiber membranes downstream of the baffle are pressed toward the pipe by the flow of the liquid that flows into the pipe again crossing the baffle. As a result, a problem arises in that, for example, the hollow fiber membranes on the outer circumferential side enter between the hollow fiber membranes on the inner circumferential side, and the inter-membrane space between the plurality of hollow fiber membranes, serving as a flow path for liquid is narrowed, thus the pressure loss of the liquid is increased.

Thus, an object of an aspect of the present invention is to provide a degassing module capable of reducing the pressure loss of liquid, and a method of degassing liquid. Solution to Problem

A degassing module according to an aspect of the present invention includes: a pipe including an in-pipe flow path having a liquid supply port and a liquid discharge port, the pipe having a plurality of holes that allow the in-pipe flow path to be open; a hollow fiber membrane group formed by winding hollow fiber membrane fabric around an outer circumferential side of the pipe so as to cover the plurality of holes, the hollow fiber membrane fabric having a plurality of hollow fiber membranes serving as wefts, and warps; a housing connected to an outer circumferential surface of the pipe and configured to store the hollow fiber membrane group; a partition unit configured to partition a region in the housing into an internal region including an inner circumferential side space of each of the plurality of hollow fiber membranes, and an external region including an inter-membrane space between the plurality of hollow fiber membranes; an air intake port of the housing, the air intake port communicating with the internal region; and a baffle configured to partition the in-pipe flow path and the inter-membrane space in an extending direction of the pipe. The ratio of the diameter of each of the plurality of hollow fiber membranes to the diameter of each of the warps is 0.6 or higher.

In the degassing module, air is sucked from the internal region through the air intake port, and liquid is supplied from the liquid supply port to the in-pipe flow path, thus liquid can be degassed. The in-pipe flow path and the inter-membrane space are partitioned in the extending direction by the baffle. Therefore, when liquid is supplied from the liquid supply port to the in-pipe flow path, the liquid flows out from the pipe on the liquid supply port side of the baffle, passes through the inter-membrane space, flows through the baffle clearance between the baffle and the housing, passes through the inter-membrane space, and flows into the pipe again on the liquid discharge port side of the baffle. In this manner, as compared to when a baffle is not provided, the degassing performance can be improved by complicating the flow of liquid by the baffle.

However, unlike the plurality of hollow fiber membranes, the warps of the hollow fiber membrane fabric do not contribute to degassing of liquid, but conversely, inhibit the flow of liquid. For this reason, conventionally, the diameter of each of the warps has been set to be extremely smaller than the diameter of each of the plurality of hollow fiber membranes. However, as a result of extensive research by the inventors, we obtained knowledge that when the voidage is constant, the pressure loss of the liquid can be reduced by increasing the ratio of the diameter of each of the warps to the diameter of each of the plurality of hollow fiber membranes. Specifically, setting 0.6 or higher ratio of the diameter of each of the warps to the diameter of each of the plurality of hollow fiber membranes can reduce the degree of decrease in the inter-membrane space between the plurality of hollow fiber membranes when pressure is applied to the plurality of hollow fiber membranes toward the pipe by the flow of the liquid that flows into the pipe again crossing the baffle. Therefore, the pressure loss of the liquid can be reduced.

The ratio of the diameter of each of the warps to the diameter of each of the plurality of hollow fiber membranes may be 1.5 or lower. In this manner, setting 1.5 or lower ratio of the diameter of each of the warps to the diameter of each of the plurality of hollow fiber membranes can prevent the number of the plurality of hollow fiber membranes stored in the housing and the membrane area of the plurality of hollow fiber membranes from becoming too small.

The diameter of each of the warps may be 50 um or greater. In this manner, setting 50 um or greater diameter of each of the warps allows space to be likely remain between the hollow fiber membranes on the outer circumferential side and the hollow fiber membranes on the inner circumferential side when pressure is applied to the plurality of hollow fiber membranes toward the pipe by the flow of the liquid that flows into the pipe again crossing the baffle. Therefore, the pressure loss of the liquid can be appropriately reduced.

The diameter of each of the warps may be 300 um or less. In this manner, setting 300 um or less diameter of each of the warps can prevent the number of the plurality of hollow fiber membranes stored in the housing and the membrane area of the plurality of hollow fiber membranes from becoming too small.

The diameter of each of the plurality of hollow fiber membranes may be 50 um or greater and 500 um or less. In this manner, setting 50 um or greater and 500 um or less diameter of each of the plurality of hollow fiber membranes can sufficiently secure the number of the plurality of hollow fiber membranes stored in the housing and the membrane area of the plurality of hollow fiber membranes, while preventing breakage of the plurality of hollow fiber membranes.

The ratio of the pitch of the warps to the diameter of each of the plurality of hollow fiber membranes may be 600 or lower. In this manner, setting 600 or lower ratio of the pitch of the warps to the diameter of each of the plurality of hollow fiber membranes can further reduce the pressure loss of the liquid when pressure is applied to the plurality of hollow fiber membranes toward the pipe by the flow of the liquid that flows into the pipe again crossing the baffle.

The ratio of the pitch of the warps to the diameter of each of the plurality of hollow fiber membranes may be 2 or higher. In this manner, setting 2 or higher ratio of the pitch of the warps to the diameter of each of the plurality of hollow fiber membranes can reduce the pressure loss of the liquid due to passing of the liquid through the warps.

The pitch of the warps may be 30 mm or less. In this manner, setting 30 mm or less pitch of the warps can reduce the degree of deformation of each of the plurality of hollow fiber membranes when pressure is applied to the plurality of hollow fiber membranes toward the pipe by the flow of the liquid that flows into the pipe again crossing the baffle. Therefore, the pressure loss of the liquid can be appropriately reduced.

The pitch of the warps may be 1 mm or greater. In this manner, setting 1 mm or greater pitch of the warps can appropriately reduce the pressure loss of the liquid due to passing of the liquid through the warps.

When the storage region is the region between the housing and the pipe in a perpendicular section perpendicular to the extending direction, and the space region is the region which excludes the plurality of hollow fiber membranes and is between the housing and the pipe in the perpendicular section, the voidage that is the ratio of the area of the space region to the area of the storage region may be 30% or higher and 80% or lower. In this manner, setting 30% or higher and 80% or lower voidage that is the ratio of the area of the space region to the area of the storage region can sufficiently secure the number of the plurality of hollow fiber membranes stored in the housing and the membrane area of the plurality of hollow fiber membranes, while reducing the pressure loss of the liquid.

The baffle may include: an inner baffle disposed on the inner circumferential side of the pipe and configured to partition the in-pipe flow path in the extending direction; and an outer baffle disposed on the outer circumferential side of the pipe and configured to partition the inter-membrane space in the extending direction. Since the degassing module includes: the inner baffle disposed on the inner circumferential side of the pipe; and the outer baffle disposed on the outer circumferential side of the pipe, the baffle can be disposed without dividing the pipe in the extending direction.

The partition unit includes: a first sealing unit disposed at a first end on one side of a hollow fiber membrane group in the extending direction; and a second sealing unit disposed at a second end on the other side of the hollow fiber membrane group in the extending direction, and each of the first sealing unit and the second sealing unit is filled in the entire region which excludes the plurality of hollow fiber membranes and is between the pipe and the housing in the perpendicular section perpendicular to the extending direction, and the plurality of holes of the pipe may be formed between the first sealing unit and the second sealing unit in the extending direction. In the degassing module, each of the first sealing unit and the second sealing unit is filled in the entire region which excludes the plurality of hollow fiber membranes and is between the pipe and the housing in the perpendicular section perpendicular to the extending direction, and the plurality of holes of the pipe are formed between the first sealing unit and the second sealing unit. Therefore, the region in the housing can be partitioned into an internal region and an external region by the first sealing unit and the second sealing unit. The first sealing unit and the second sealing unit are disposed at the first end on one side and at the second end on the other side of the hollow fiber membrane group in the extending direction, thus the liquid can be brought into contact with the plurality of hollow fiber membranes in a long range in the extending direction.

The air intake port may include: a first air intake port formed on the opposite side of the second sealing unit with respect to the first sealing unit in the extending direction; and a second air intake port formed on the opposite side of the first sealing unit with respect to the second sealing unit in the extending direction. In the degassing module, the first air intake port and the second air intake port are formed outward of the first sealing unit and the second sealing unit in the extending direction, thus air can be sucked from the inner circumferential side space of each of the plurality of hollow fiber membranes through both ends of the plurality of hollow fiber membranes. Therefore, the degassing efficiency of the liquid can be improved.

A method of degassing liquid according to an aspect of the present invention is such that air is sucked from the internal region through the air intake port, and liquid is supplied from the liquid supply port to the in-pipe flow path in one of the degassing modules described above. In the method of degassing liquid, the liquid is degassed using one of the degassing modules described above, thus the pressure loss of the liquid can be reduced.

### Advantageous Effects of Invention

According to an aspect of the present invention, the pressure loss of liquid can be reduced.

### Brief Description of Drawings

[Fig. 1] Fig. 1 is a schematic sectional view of a degassing module according to an embodiment.
[Fig. 2] Fig. 2 is a schematic sectional view taken along line II-II illustrated in Fig. 1.
[Fig. 3] Fig. 3 is an enlarged schematic sectional view of part of the degassing module illustrated in Fig. 1.
[Fig. 4] Fig. 4 is an enlarged schematic sectional view of part of the degassing module illustrated in Fig. 1.
[Fig. 5] Fig. 5 is an enlarged schematic sectional view of part of the degassing module illustrated in Fig. 1.
[Fig. 6] Fig. 6 is a schematic view illustrating part of hollow fiber membrane fabric.
[Fig. 7] Fig. 7 is a schematic sectional view illustrating an example of a method of forming a baffle.
[Fig. 8] Fig. 8 is a schematic sectional view illustrating the example of the method of forming the baffle.
[Fig. 9] Fig. 9 is an enlarged schematic sectional view of part of Fig. 2.
[Fig. 10] Fig. 10 is a graph showing a result of measurement of pressure loss.

### Description of Embodiments

Hereinafter, a degassing module and a method of degassing liquid in an embodiment will be described with reference to the drawings. Note that the same or equivalent components in the entire drawings are labeled with the same symbol, and a redundant description is omitted.

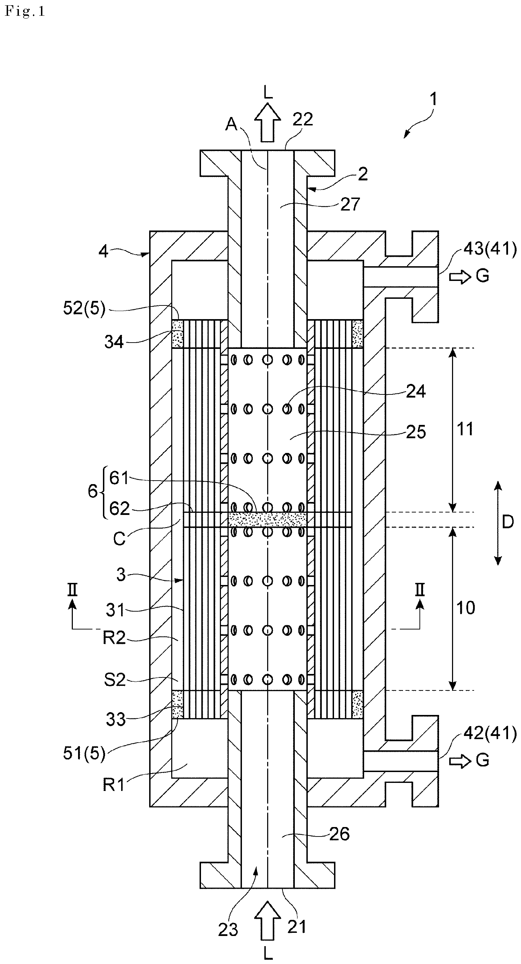

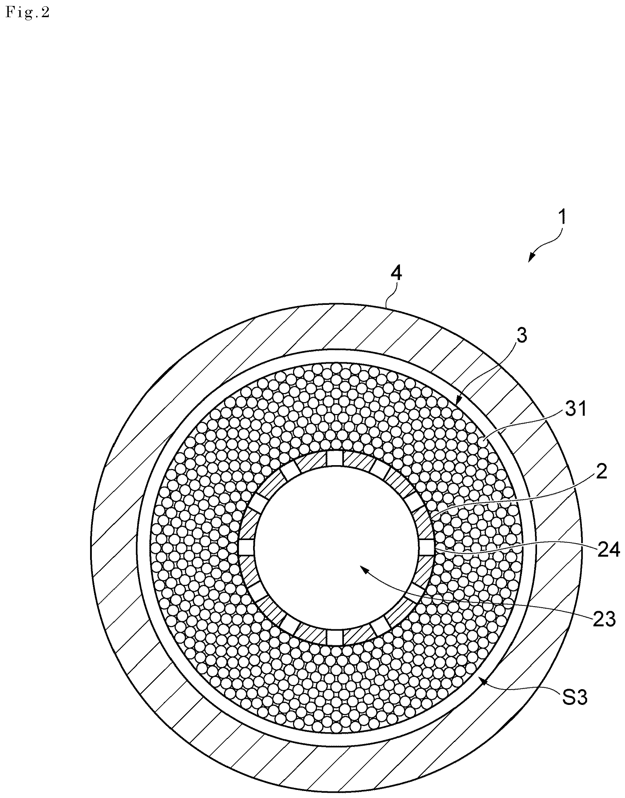

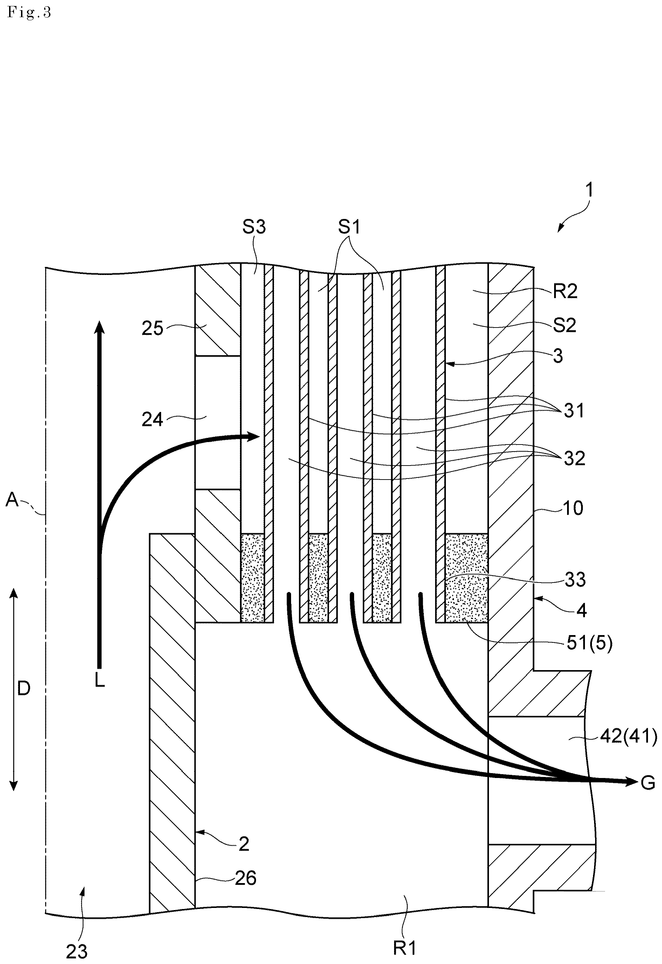

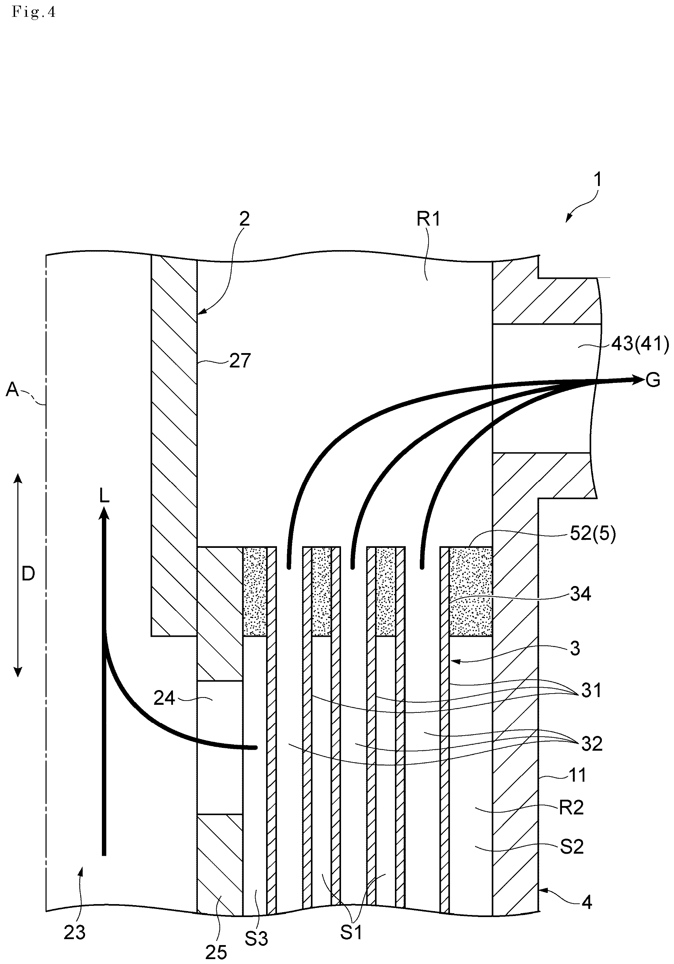

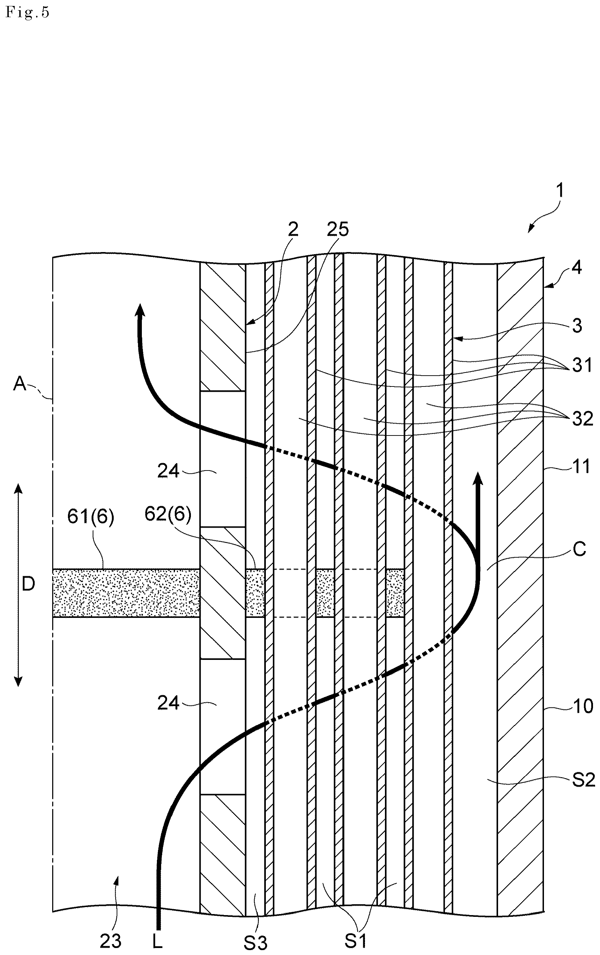

Fig. 1 is a schematic sectional view of a degassing module according to an embodiment. Fig. 2 is a schematic sectional view taken along line II-II illustrated in Fig. 1. Fig. 3 to Fig. 5 are each an enlarged schematic sectional view of part of the degassing module illustrated in Fig. 1. As illustrated in Fig. 1 to Fig. 5, a degassing module 1 according to the embodiment is a module for degassing liquid L. The liquid L degassed by the degassing module 1 is not limited to specific liquid, and may be, for example, water such as seawater, drinking water, pure water, and ultrapure water, water solution in which ammonium sulfate, surface-active agent, or the like is dissolved, an organic solvent such as alcohol and hydrocarbon, and ionic liquid.

The degassing module 1 includes a pipe 2, a hollow fiber membrane group 3, a housing 4, a partition unit 5, and a baffle 6.

The pipe 2 is a cylindrical member linearly extending along a central axis A. The direction in which the pipe 2 extends cylindrically, in other words, the direction of the central axis A is referred to as an extending direction D. The pipe 2 forms an in-pipe flow path 23 having a liquid supply port 21 and a liquid discharge port 22. The in-pipe flow path 23 is a flow path formed by the inner circumferential surface of the pipe 2, the flow path allowing the liquid L to flow therethrough.

The pipe 2 includes a plurality of holes 24 that allow the in-pipe flow path 23 to be open. The plurality of holes 24 are holes for outputting the liquid L from the in-pipe flow path 23 to the outside of the pipe 2 as well as for inputting the liquid L from the outside of the pipe 2 to the in-pipe flow path 23.

The pipe 2 includes a hole formation part 25, a first hole non-formation part 26, and a second hole non-formation part 27. The hole formation part 25 is a part in which the plurality of holes 24 are formed. The first hole non-formation part 26 and the second hole non-formation part 27 are parts in which the plurality of holes 24 are not formed. The hole formation part 25 is located in the central part of the pipe 2 in the extending direction D. The first hole non-formation part 26 is adjacent to the hole formation part 25 on the side thereof closer to the liquid supply port 21 in the extending direction D. The second hole non-formation part 27 is adjacent to the hole formation part 25 on the side thereof closer to the liquid discharge port 22 in the extending direction D.

The inner diameter and the outer diameter of the hole formation part 25, the first hole non-formation part 26, and the second hole non-formation part 27 are not limited to specific ones. For example, from the viewpoint of increasing the total area of the plurality of holes 24, the inner diameter and the outer diameter of the hole formation part 25 may be larger than the inner diameters and the outer diameters of the first hole non-formation part 26 and the second hole non-formation part 27. For example, the hole formation part 25, the first hole non-formation part 26, and the second hole non-formation part 27 are separate members, and the pipe 2 may be formed by inserting the first hole non-formation part 26 and the second hole non-formation part 27 having a small diameter into both ends of the hole formation part 25 having a large diameter.

The hollow fiber membrane group 3 is formed by winding hollow fiber membrane fabric 8 around the outer circumferential side of the pipe 2 so as to cover the plurality of holes 24. In other words, the hollow fiber membrane group 3 is formed by the hollow fiber membrane fabric 8 that is disposed on the outer circumferential side of the pipe 2 to cover the plurality of holes 24.

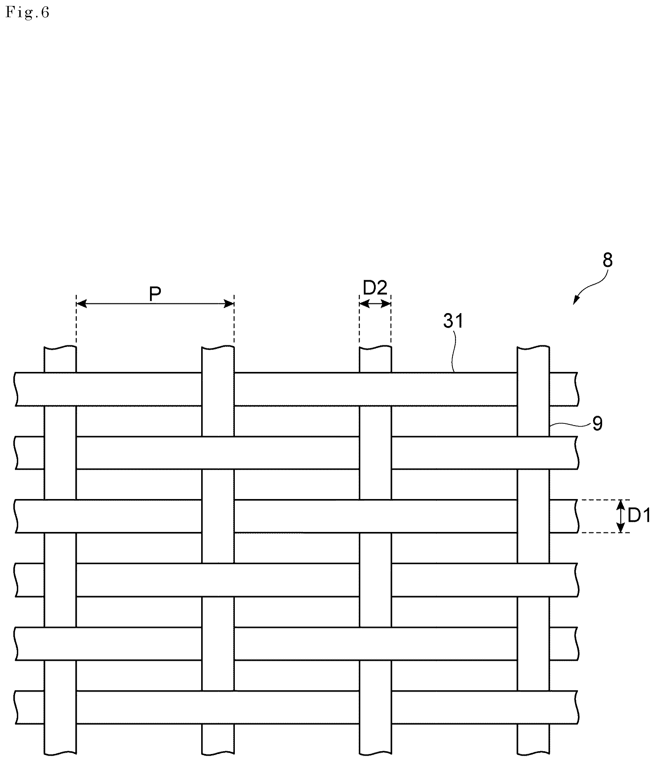

Fig. 6 is a schematic view illustrating part of the hollow fiber membrane fabric. As illustrated in Fig. 6, the hollow fiber membrane fabric 8 includes a plurality of hollow fiber membranes 31 as wefts, and warps 9. The hollow fiber membrane fabric 8 is formed by weaving the plurality of hollow fiber membranes 31 disposed substantially in parallel, and the warps 9 extending in a direction substantially perpendicular to the plurality of hollow fiber membranes 31. The woven structure of the plurality of hollow fiber membranes 31 and the warps 9 is not limited to a specific structure, and various woven structures may be adopted. The hollow fiber membrane fabric 8 is wound around the pipe 2 so that the plurality of hollow fiber membranes 31 extend in the extending direction D as in the pipe 2.

Each of the plurality of hollow fiber membranes 31 is a hollow fiber membrane that allows gas G to pass therethrough but does not allow liquid L to pass therethrough. The material, membrane shape, membrane morphology, and the like of each of the plurality of hollow fiber membranes 31 are not limited to specific ones. The material for the plurality of hollow fiber membranes 31 includes, for example, a polyolefin-based resin such as polypropylene, polyethylene, and polymethylpentene, a silicon-based resin such as polydimethylsiloxane and a copolymer thereof, and a fluorine-based resin such as PTFE and vinylidene fluoride. The membrane shape (the shape of sidewall) of each of the plurality of hollow fiber membranes 31 includes, for example, a porous membrane, a microporous membrane, and a homogeneous membrane without porosity (non-porous membrane). The membrane morphology of each of the plurality of hollow fiber membranes 31 includes, for example, a symmetric membrane (homogeneous membrane) in which the chemical or physical structure of the entire membrane is homogeneous, and an asymmetric membrane (heterogeneous membrane) in which the chemical or physical structure of the membrane varies within the membrane. An asymmetric membrane (heterogeneous membrane) is a membrane having a non-porous dense layer and porosity. In this case, the dense layer may be formed anywhere in the membrane, such as in a surface layer portion of the membrane, or inside the porous membrane. The heterogeneous membrane also includes a composite membrane with different chemical structures, and a multilayer structure membrane such as a three-layer structure membrane. Particularly, a heterogeneous membrane using a poly (4-methyl pentene-1) resin has a dense layer that blocks the liquid L, thus is particularly preferable. For the use of an external perfusion system, it is preferable that the dense layer be formed on the outer surface.

As illustrated in Fig. 1 to Fig. 5, the hollow fiber membrane group 3 is disposed on the outer circumferential side of the hole formation part 25 of the pipe 2, and is not disposed on the outer circumferential side of the first hole non-formation part 26 or the second hole non-formation part 27 of the pipe 2. In other words, the hollow fiber membrane group 3 is formed such that the hollow fiber membrane fabric is wound around the hole formation part 25. Therefore, the hollow fiber membrane group 3 is formed in a substantially cylindrical shape.

In the hollow fiber membrane group 3, an inter-membrane space S1, through which the liquid L can flow, is formed between the plurality of hollow fiber membranes 31 (between adjacent hollow fiber membranes 31). The inter-membrane space S1 is also formed between the plurality of hollow fiber membranes 31 in the circumferential direction of the pipe 2, and is also formed between the plurality of hollow fiber membranes 31 in the circumferential direction of the pipe 2. In other words, the inter-membrane space S1 is also formed between adjacent hollow fiber membranes 31 in the hollow fiber membrane fabric 8, and is also formed between the hollow fiber membrane 31 (the hollow fiber membrane 31 on the inner circumferential side) in the hollow fiber membrane fabric 8 on the inner circumferential side, and the hollow fiber membrane 31 (the hollow fiber membrane 31 on the outer circumferential side) in the hollow fiber membrane fabric 8 on the outer circumferential side.

The housing 4 is connected to the outer circumferential surface of the pipe 2 and stores the hollow fiber membrane group 3. The housing 4 is formed in a cylindrical shape extending in the extending direction D of the pipe 2. Both ends of the housing 4 in the extending direction D are hermetically connected to the outer circumferential surface of the pipe 2. The connection of the housing 4 to the pipe 2 can be performed by, for example, welding, or adhering. The both ends of the pipe 2 may not project from the housing 4; however, from the viewpoint of easiness of connection of other members to the pipe 2, in this embodiment, the both ends of the pipe 2 project from the housing 4.

In the housing 4, an air intake port 41 is formed. The air intake port 41 is an opening to suck air from the housing 4. The air intake port 41 includes a first air intake port 42 and a second air intake port 43. Each of the first air intake port 42 and the second air intake port 43 is an opening to suck air from the housing 4. The first air intake port 42 and the second air intake port 43 are connected to, for example, a suction device (not illustrated) such as a vacuum pump.

In the housing 4, a liquid flow space S2 is formed. The liquid flow space S2 is a space between the hollow fiber membrane group 3 and the housing 4, the space allowing the liquid L to flow therethrough. The liquid flow space S2 is a space formed between the hollow fiber membrane group 3 and the housing 4 in at least an unused state of the degassing module 1. Therefore, in an unused state of the degassing module 1, the hollow fiber membrane group 3 is not in contact with the inner circumferential surface of the housing 4. Note that after the degassing module 1 is used, the hollow fiber membrane group 3 may be in contact with the inner circumferential surface of the housing 4 due to swelling of the plurality of hollow fiber membranes 31.

The partition unit 5 partitions the region in the housing 4 into an internal region R1 and an external region R2. The internal region R1 is a region including an inner circumferential side space 32 of each of the plurality of hollow fiber membranes 31. The external region R2 is a region including the inter-membrane space S1. Therefore, each of the plurality of hollow fiber membranes 31 is a boundary between the internal region R1 and the external region R2. Each of the plurality of hollow fiber membranes 31 prevents passage of the liquid L from the external region R2 to the internal region R1, and allows passage of the gas G (such as dissolved gas in the liquid L or air bubbles contained in the liquid L) from the external region R2 to the internal region R1.

The partition unit 5 includes a first sealing unit 51, and a second sealing unit 52. The first sealing unit 51 is disposed at a first end 33 on one side of the hollow fiber membrane group 3 in the extending direction D. The first end 33 is an end closer to the liquid supply port 21 in the extending direction D. The first end 33 of the hollow fiber membrane group 3 is fixed to the outer circumferential surface of the pipe 2 and the inner circumferential surface of the housing 4 by the first sealing unit 51. The second sealing unit 52 is disposed at a second end 34 on the other side of the hollow fiber membrane group 3 in the extending direction D. The second end 34 is an end closer to the liquid discharge port 22 in the extending direction D. The second end 34 of the hollow fiber membrane group 3 is fixed to the outer circumferential surface of the pipe 2 and the inner circumferential surface of the housing 4 by the second sealing unit 52. The first sealing unit 51 and the second sealing unit 52 are made of, for example, resin. The resin used for the first sealing unit 51 and the second sealing unit 52 includes, for example, an epoxy resin, a urethane resin, an ultraviolet curable resin, and a polyolefin resin such as polyethylene and polypropylene.

The entire region which excludes the plurality of hollow fiber membranes 31 and is between the pipe 2 and the housing 4 in a perpendicular section perpendicular to the extending direction D is filled with each of the first sealing unit 51 and the second sealing unit 52. In other words, a region between the pipe 2 and the hollow fiber membrane group 3, a region between the plurality of hollow fiber membranes 31, and a region between the hollow fiber membrane group 3 and the housing 4 are filled with each of the first sealing unit 51 and the second sealing unit 52. The inner circumferential side space 32 of each of the plurality of hollow fiber membranes 31 is open from the first sealing unit 51 toward the liquid supply port 21, and is open from the second sealing unit 52 toward the liquid discharge port 22.

The first sealing unit 51 is disposed between the hole formation part 25 and the first hole non-formation part 26 in the extending direction D. The second sealing unit 52 is disposed between the hole formation part 25 and the second hole non-formation part 27 in the extending direction D. In other words, the plurality of holes 24 of the pipe 2 are formed between the first sealing unit 51 and the second sealing unit 52 in the extending direction D. Thus, the region between the pipe 2 and the housing 4, and on the side of the first sealing unit 51, closer to the liquid supply port 21 is the internal region R1. Also, the region between the pipe 2 and the housing 4, and on the side of the second sealing unit 52, closer to the liquid discharge port 22 is the internal region R1.

The first air intake port 42 is formed on the opposite side of the second sealing unit 52 with respect to the first sealing unit 51 in the extending direction D, that is, the first air intake port 42 is disposed on the side of the first sealing unit 51, closer to the liquid supply port 21 in the extending direction D. The first air intake port 42 communicates with the internal region R1 which is between the pipe 2 and the housing 4, and located on the side of the first sealing unit 51, closer to the liquid supply port 21. The second air intake port 43 is formed on the opposite side of the first sealing unit 51 with respect to the second sealing unit 52 in the extending direction D, that is, the second air intake port 43 is disposed on the side of the second sealing unit 52, closer to the liquid discharge port 22 in the extending direction D. The second air intake port 43 communicates with the internal region R1 which is between the pipe 2 and the housing 4, and located on the side of the second sealing unit 52, closer to the liquid discharge port 22.

The baffle 6 is disposed between the first sealing unit 51 and the second sealing unit 52 in the extending direction D so that the liquid L supplied to the liquid supply port 21 is diverted, and brought into contact with the plurality of hollow fiber membranes 31. Here, the region of the degassing module 1 between the first sealing unit 51 and the baffle 6 in the extending direction D is referred to as an upstream part 10, and the region of the degassing module 1 between the baffle 6 and the second sealing unit 52 in the extending direction D is referred to as a downstream part 11.

The baffle 6 partitions the in-pipe flow path 23 and the inter-membrane space S1 in the extending direction D. More specifically, the baffle 6 partitions the in-pipe flow path 23 in the extending direction D, and partitions the external region R2 in the extending direction D so that a baffle clearance C is formed between itself and the housing 4. In other words, the in-pipe flow path 23 is partitioned by the baffle 6 in the extending direction D. In addition, the inter-membrane space S1 is partitioned by the baffle 6 in the extending direction D. In addition, the external region R2 is partitioned by the baffle 6 in the extending direction D so that the baffle clearance C is formed between the baffle 6 and the housing 4. Thus, in the upstream part 10, the liquid L supplied from the liquid supply port 21 to the in-pipe flow path 23 flows out from the pipe 2, passes through the inter-membrane space S1, and flows through the baffle clearance C between the baffle 6 and the housing 4, and in the downstream part 11, the liquid L passes through the inter-membrane space S1, and enters the pipe 2.

The position of the baffle 6 in the extending direction D can be any position between the first sealing unit 51 and the second sealing unit 52. For example, from the viewpoint of reducing the pressure loss of the liquid L when the liquid L is diverted at the baffle 6, the baffle 6 can be disposed in the central part when the range between the first sealing unit 51 and the second sealing unit 52 is divided into three in the extending direction D.

The baffle 6 includes an inner baffle 61, and an outer baffle 62. The inner baffle 61 is disposed on the inner circumferential side of the pipe 2 to partition the in-pipe flow path 23 in the extending direction D. The outer baffle 62 is disposed on the outer circumferential side of the pipe 2 to partition at least part of the inter-membrane space S1 in the extending direction D.

The inner baffle 61 may completely partition the in-pipe flow path 23 in the extending direction D, or may incompletely partition the in-pipe flow path 23 in the extending direction D. In other words, the inner baffle 61 may completely block the in-pipe flow path 23 to inhibit passage of the liquid L from the in-pipe flow path 23 in the upstream part 10 to the in-pipe flow path 23 in the downstream part 11. Alternatively, the inner baffle 61 may partially block the in-pipe flow path 23 to allow passage of the liquid L from the in-pipe flow path 23 in the upstream part 10 to the in-pipe flow path 23 in the downstream part 11. Even when the inner baffle 61 partially blocks the in-pipe flow path 23, passage of the liquid L from the in-pipe flow path 23 in the upstream part 10 to the in-pipe flow path 23 in the downstream part 11 is partially inhibited by the inner baffle 61, thus the liquid L supplied to the liquid supply port 21 can be diverted, and brought into contact with the plurality of hollow fiber membranes 31.

The inner baffle 61 is made of, for example, resin. The resin used for the inner baffle 61 includes, for example, an urethane-based resin such as polyurethane (PU) and thermoplastic polyurethane (TPU); polycarbonate (PC); a vinyl chloride-based resin such as polyvinyl chloride (PVC) and vinyl chloride-vinyl acetate copolymer resin; an acrylic-based resin such as polyacrylic acid, polymethacrylic acid, polymethyl acrylate, polymethyl methacrylate (PMMA), and polyethyl methacrylate; a polyester-based resin such as polyethylene terephthalate (PET), polybutylene terephthalate, polytrimethylene terephthalate, polyethylene naphthalate, and polybutylene naphthalate; a polyamide-based resin such as nylon (registered trademark); a polystyrene resin such as polystyrene (PS), imide modified polystyrene, acrylonitrile butadiene styrene (ABS) resin, imide modified ABS resin, styrene acrylonitrile copolymerization (SAN) resin, and acrylonitrile ethylene-propylene-diene styrene (AES) resin; an olefin-based resin such as a polyethylene (PE) resin, a polypropylene (PP) resin, a polymethylpentene (PMP) resin, and a cycloolefin resin; a cellulose-based resin such as nitrocellulose and cellulose acetate; a silicone-based resin; a fluorine resin; a thermoplastic resin such as a polyphenylene ether (PPE)-based resin, an epoxy (EPOXY)-based resin such as a bisphenol A type epoxy resin, a bisphenol F type epoxy resin, an isocyanurate epoxy resin, and a hydantoin-based epoxy resin; an amino resin such as a melamine resin and a urea resin; a phenolic resin; and a thermosetting resin such as an unsaturated polyester-based resin. Among these, PP, PE, EPOXY, PC, ABS, PPE, PMMA, PMP, and PU are preferable.

The outer baffle 62 is disposed in the inter-membrane space S1 (between the plurality of hollow fiber membranes 31) to partition the inter-membrane space S1 in the extending direction D. The outer baffle 62 may completely partition the inter-membrane space S1 in the extending direction D, or may incompletely partition the inter-membrane space S1 in the extending direction D. In other words, the outer baffle 62 may completely block the inter-membrane space S1 to inhibit passage of the liquid L from the inter-membrane space S1 in the upstream part 10 to the inter-membrane space S1 in the downstream part 11. Alternatively, the outer baffle 62 may partially block the inter-membrane space S1 to allow passage of the liquid L from the inter-membrane space S1 in the upstream part 10 to the inter-membrane space S1 in the downstream part 11. Even when the outer baffle 62 partially blocks the inter-membrane space S1, passage of the liquid L from the inter-membrane space S1 in the upstream part 10 to the inter-membrane space S1 in the downstream part 11 is partially inhibited by the outer baffle 62, thus the liquid L supplied to the liquid supply port 21 can be diverted, and brought into contact with the plurality of hollow fiber membranes 31.

The outer baffle 62 may also be disposed in a pipe-side space S3 which is the space between the pipe 2 and the hollow fiber membrane group 3 to partition the pipe-side space S3 in the extending direction D. In this case, the outer baffle 62 may completely partition the pipe-side space S3 in the extending direction D, or may incompletely partition the pipe-side space S3 in the extending direction D. In other words, the outer baffle 62 may completely block the pipe-side space S3 to inhibit passage of the liquid L from the pipe-side space S3 in the upstream part 10 to the pipe-side space S3 in the downstream part 11. Alternatively, the outer baffle 62 may partially block the pipe-side space S3 to allow passage of the liquid L from the pipe-side space S3 in the upstream part 10 to the pipe-side space S3 in the downstream part 11. If part of the liquid L supplied to the liquid supply port 21 can be diverted, and brought into contact with the plurality of hollow fiber membranes 31, the outer baffle 62 may not partition the pipe-side space S3 in the extending direction D without being disposed in the pipe-side space S3.

The outer baffle 62 is spaced away from the housing 4. However, if the baffle clearance C is formed even in part of the space between the outer baffle 62 and the housing 4, the outer baffle 62 may be in contact with the housing 4. Although the outer baffle 62 is not disposed in the liquid flow space S2, if the baffle clearance C is formed even in part of the space between the outer baffle 62 and the housing 4, the outer baffle 62 may be disposed in the liquid flow space S2.

The outer baffle 62 is made of, for example, resin. The resin used for the outer baffle 62 includes, for example, an urethane-based resin such as polyurethane (PU) and thermoplastic polyurethane (TPU); polycarbonate (PC); a vinyl chloride-based resin such as polyvinyl chloride (PVC) and vinyl chloride-vinyl acetate copolymer resin; an acrylic-based resin such as polyacrylic acid, polymethacrylic acid, polymethyl acrylate, polymethyl methacrylate (PMMA), and polyethyl methacrylate; a polyester-based resin such as polyethylene terephthalate (PET), polybutylene terephthalate, polytrimethylene terephthalate, polyethylene naphthalate, and polybutylene naphthalate; a polyamide-based resin such as nylon (registered trademark); a polystyrene resin such as polystyrene (PS), imide modified polystyrene, acrylonitrile butadiene styrene (ABS) resin, imide modified ABS resin, styrene acrylonitrile copolymerization (SAN) resin, and acrylonitrile ethylene-propylene-diene styrene (AES) resin; an olefin-based resin such as a polyethylene (PE) resin, a polypropylene (PP) resin, a polymethylpentene (PMP) resin, and a cycloolefin resin; a cellulose-based resin such as nitrocellulose and cellulose acetate; a silicone-based resin; a fluorine resin; a thermoplastic resin such as a polyphenylene ether (PPE)-based resin, an epoxy (EPOXY)-based resin such as a bisphenol A type epoxy resin, a bisphenol F type epoxy resin, an isocyanurate epoxy resin, and a hydantoin-based epoxy resin; an amino resin such as a melamine resin and a urea resin; a phenolic resin; and a thermosetting resin such as an unsaturated polyester-based resin. Among these, PP, PE, PVC, EPOXY, PMP, and PU are preferable.

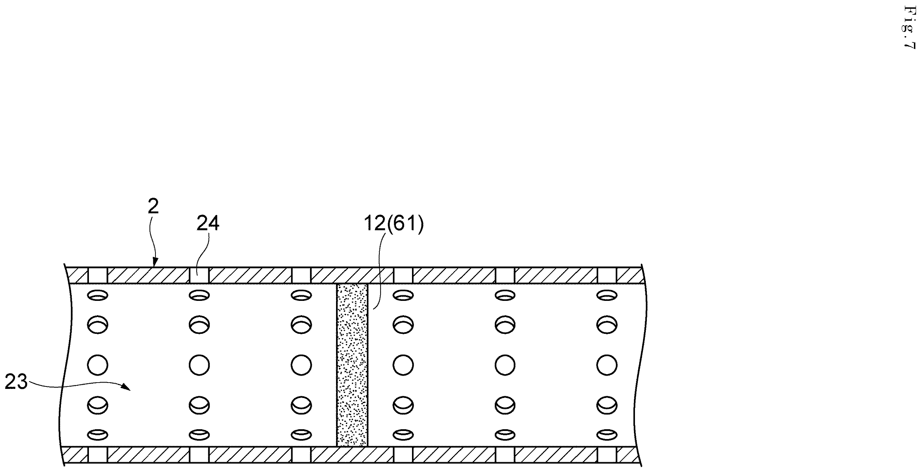

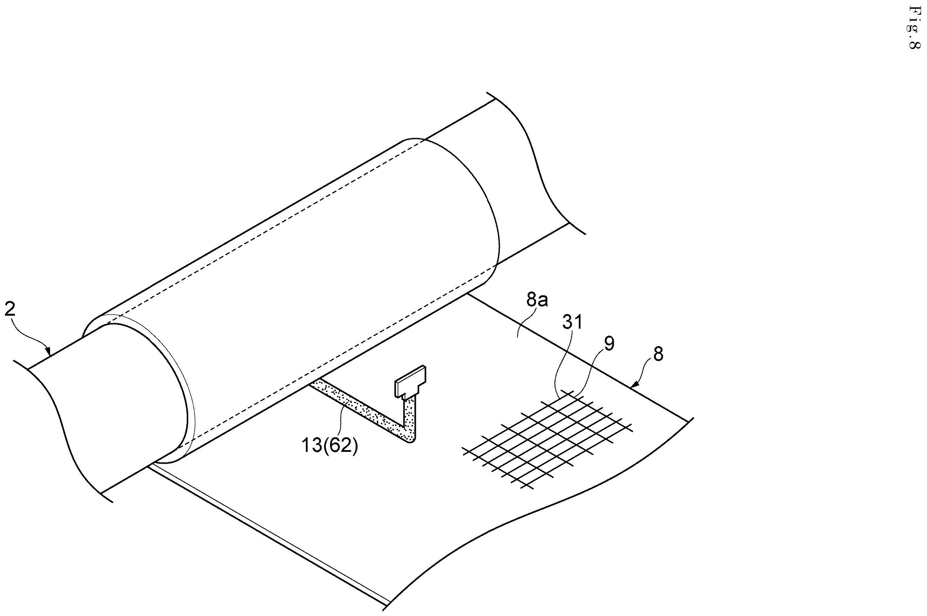

Fig. 7 and Fig. 8 are schematic sectional views illustrating an example of a method of forming the baffle 6. When the baffle 6 is formed, as illustrated in Fig. 7, first, a disc-shaped member 12 made of resin is fitted into the in-pipe flow path 23 of the pipe 2. The disc-shaped member becomes the inner baffle 61.

Next, as illustrated in Fig. 7 and Fig. 8, the hollow fiber membrane fabric 8 is wound around the pipe 2 so as to cover the plurality of holes 24 of the pipe 2. In this process, when a fabric inner surface 8a is the surface of the hollow fiber membrane fabric 8, to be wound around the pipe 2, a molten resin 13 is applied to a position corresponding to the outer baffle 62 of the fabric inner surface 8a. The hollow fiber membrane fabric 8 with the molten resin 13 applied thereto is wound around the pipe 2. The hollow fiber membrane fabric 8 on the inner layer side and the hollow fiber membrane fabric 8 on the outer layer side are then impregnated with the molten resin 13, and a position corresponding to the outer baffle 62 is filled with the molten resin 13. Subsequently, the molten resin 13 cures and becomes the outer baffle 62.

Next, a method of degassing the liquid L using the degassing module 1 will be described.

Air is sucked from the internal region R1 through the first air intake port 42 and the second air intake port 43, and the liquid L is supplied from the liquid supply port 21 to the in-pipe flow path 23. Sucking air from the internal region R1 through the first air intake port 42 and the second air intake port 43 can be performed, for example, by attaching a suction device (not illustrated) such as a vacuum pump to the first air intake port 42 and the second air intake port 43, and activating the suction device. Sucking air from the internal region R1 through the first air intake port 42 and the second air intake port 43 achieves a decompressed state of the internal region R1 including the inner circumferential side space 32 of each of the plurality of hollow fiber membranes 31.

The liquid supplied to the in-pipe flow path 23 passes through the plurality of holes 24 formed in the pipe 2 in the upstream part 10 so as to bypass the baffle 6, flows out from the pipe 2, and passes through the inter-membrane space S1. At this point, a decompressed state is achieved in the inner circumferential side space 32 of each of the plurality of hollow fiber membranes 31, therefore the gas G such as dissolved gas in the liquid L, and air bubbles contained in the liquid L passes through each of the plurality of hollow fiber membranes 31, thus the liquid L is degassed. Subsequently, the liquid L passes through the baffle clearance C, flows through the inter-membrane space S1 in the downstream part 11, and enters the pipe 2 through the plurality of holes 24 formed in the pipe 2. Also, at this point, a decompressed state is achieved in the inner circumferential side space 32 of each of the plurality of hollow fiber membranes 31, therefore the gas G such as dissolved gas in the liquid L, and air bubbles contained in the liquid L passes through each of the plurality of hollow fiber membranes 31, thus the liquid L is degassed. Subsequently, the degassed liquid L which has entered the pipe 2 is discharged through the liquid discharge port 22.

In this manner, with the degassing module 1 according to this embodiment, air is sucked from the internal region R1 through the first air intake port 42 and the second air intake port 43, and the liquid L is supplied from the liquid supply port 21 to the in-pipe flow path 23, thereby making it possible to degas the liquid L. The in-pipe flow path 23 and the inter-membrane space S1 are partitioned by the baffle 6 in the extending direction D. Thus, when the liquid L is supplied from the liquid supply port 21 to the in-pipe flow path 23, the liquid L flows out from the pipe 2 on the side of the baffle 6, closer to the liquid supply port 21, passes through the inter-membrane space S1, flows through the baffle clearance C between the baffle 6 and the housing 4, passes through the inter-membrane space S1, and flows into the pipe 2 again on the side of the baffle 6, closer to the liquid discharge port 22. In this manner, as compared to when the baffle 6 is not provided, the degassing performance can be improved by complicating the flow of the liquid L by the baffle 6.

Meanwhile, unlike the plurality of hollow fiber membranes 31, the warps 9 of the hollow fiber membrane fabric 8 do not contribute to degassing of the liquid L, but conversely, inhibit the flow of the liquid L. For this reason, conventionally, the diameter of each of the warps has been set to be extremely smaller than the diameter of each of the plurality of hollow fiber membranes. However, as a result of extensive research by the inventors, we obtained knowledge that when the voidage is constant, the pressure loss of the liquid L can be reduced by increasing the ratio of the diameter D2 of each of the warps 9 to the diameter D1 of each of the plurality of hollow fiber membranes 31.

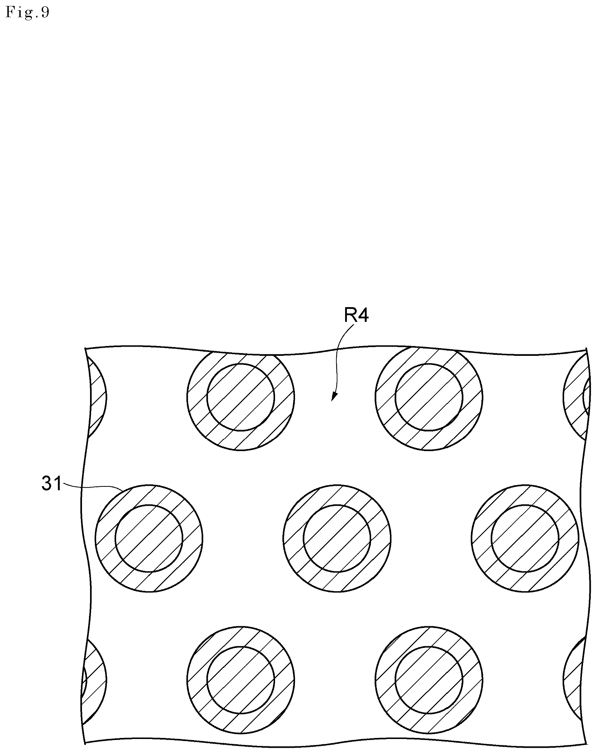

The voidage will be described with reference to Fig. 2 and Fig. 9. Fig. 9 is an enlarged schematic sectional view of part of Fig. 2. Note that Fig. 2 and Fig. 9 illustrate a perpendicular section perpendicular to the extending direction D. As illustrated in Fig. 2 and Fig. 9, the region between the housing 4 and the pipe 2 in the perpendicular section perpendicular to the extending direction D is referred to as a storage region R3. The storage region R3 is a region including the plurality of hollow fiber membranes 31. Also, the region which excludes the plurality of hollow fiber membranes 31 and is between the housing 4 and the pipe 2 in the perpendicular section perpendicular to the extending direction D is referred to as a space region R4. The space region R4 is the region obtained by excluding the region hatched by oblique lines in Fig. 9 from the storage region R3. The ratio (the ratio of the area of the space region R4/the area of the storage region R3) of the area of the space region R4 to the area of the storage region R3 is called a voidage.

Thus, in the degassing module 1 according to this embodiment, the ratio of the diameter D2 of each of the warps to the diameter D1 of each of the plurality of hollow fiber membranes is 0.6 or higher. In other words, D2/D1 is 0.6 or higher. When the ratio of 0.6 is expressed in terms of percentage, the ratio is 60%. In this case, the ratio of the diameter D2 to the diameter D1 may be 0.7 or higher, or may be 0.8 or higher. In this manner, setting the ratio of the diameter D2 to the diameter D1 to 0.6 or higher, preferably 0.7 or higher, more preferably 0.8 or higher can reduce the degree of decrease in the inter-membrane space S1 between the plurality of hollow fiber membranes 31 when pressure is applied to the plurality of hollow fiber membranes 31 toward the pipe 2 by the flow of the liquid L that flows into the pipe 2 again crossing the baffle 6. Therefore, the pressure loss of the liquid L can be reduced.

The ratio of the diameter D2 to the diameter D1 may be 1.5 or lower, may be 1 or lower, or may be 0.8 or lower. When the ratio of 1.5 is expressed in terms of percentage, the ratio is 150%. In this manner, setting the ratio of the diameter D2 to the diameter D1 to 1.5 or lower, preferably 1 or lower, more preferably 0.8 or lower can prevent the number of the plurality of hollow fiber membranes 31 stored in the housing 4 and the membrane area of the plurality of hollow fiber membranes 31 from becoming too small.

The diameter D2 of each of the warps 9 may be 50 um or greater, may be 100 um or greater, or 150 um or greater. In this manner, setting the diameter D2 of each of the warps 9 to 50 um or greater, preferably 100 um or greater, more preferably 150 um or greater allows space to be likely remain between the hollow fiber membranes 31 on the outer circumferential side and the hollow fiber membranes 31 on the inner circumferential side when pressure is applied to the plurality of hollow fiber membranes 31 toward the pipe 2 by the flow of the liquid L that flows into the pipe 2 again crossing the baffle 6. Therefore, the pressure loss of the liquid L can be appropriately reduced.

The diameter D2 of each of the warps 9 may be 300 um or less, may be 250 um or less, or may be 200 um or less. In this manner, setting the diameter D2 of each of the warps 9 to 300 um or less, preferably 250 um or less, more preferably 200 um or less can prevent the number of the plurality of hollow fiber membranes 31 stored in the housing 4 and the membrane area of the plurality of hollow fiber membranes 31 from becoming too small.

The diameter D1 of each of the plurality of hollow fiber membranes 31 may be 50 um or greater and 500 um or less, may be 100 um or greater and 350 um or less, or may be 150 um or greater and 250 um or less. In this manner, setting the diameter D1 of each of the plurality of hollow fiber membranes 31 to 50 um or greater and 500 um or less, preferably 100 um or greater and 350 um or less, more preferably 150 um or greater and 250 um or less can sufficiently secure the number of the plurality of hollow fiber membranes 31 stored in the housing 4 and the membrane area of the plurality of hollow fiber membranes 31, while preventing breakage of the plurality of hollow fiber membranes 31.

The ratio of pitch P of the warps 9 to the diameter D1 of each of the plurality of hollow fiber membranes 31 may be 600 or lower, may be 100 or lower, or may be 40 or lower. In other words, P/D1 may be 600 or lower, 100 or lower, or 40 or lower. When the ratio of 600 is expressed in terms of percentage, the ratio is 60000%. In this manner, setting the ratio of the pitch P to the diameter D1 to 600 or lower, preferably 100 or lower, more preferably 40 or lower can reduce the degree of deformation of each of the plurality of hollow fiber membranes when pressure is applied to the plurality of hollow fiber membranes 31 toward the pipe 2 by the flow of the liquid L that flows into the pipe 2 again crossing the baffle 6. Therefore, the pressure loss of the liquid L can be further reduced.

The ratio of the pitch P of the warps 9 to the diameter D1 of each of the plurality of hollow fiber membranes 31 may be 2 or higher, may be 5.7 or higher, or may be 16 or higher. In other words, P/D1 may be 2 or higher, 5.7 or higher, or 16 or higher. When the ratio of 2 is expressed in terms of percentage, the ratio is 200%. In this manner, setting the ratio of the pitch P to the diameter D1 to 2 or higher, preferably 5.7 or higher, more preferably 16 or higher can reduce the pressure loss of the liquid L due to passing of the liquid L through the warps 9.

The pitch P of the warps 9 may be 30 mm or less, may be 10 mm or less, or may be 6 mm or less. In this manner, setting the pitch P to 30 mm or less, preferably 10 mm or less, more preferably 6 mm or less can reduce the degree of deformation of each of the plurality of hollow fiber membranes 31 when pressure is applied to the plurality of hollow fiber membranes 31 toward the pipe 2 by the flow of the liquid L that flows into the pipe 2 again crossing the baffle 6. Therefore, the pressure loss of the liquid L can be appropriately reduced.

The pitch P of the warps 9 may be 1 mm or greater, may be 2 mm or greater, or may be 4 mm or greater. In this manner, setting the pitch P to 1 mm or greater, preferably 2 mm or greater, more preferably 4 mm or greater can appropriately reduce the pressure loss of the liquid L due to passing of the liquid L through the warps 9.

The voidage that is the ratio of the area of the space region R4 to the area of the storage region R3 may be 30% or higher and 80% or lower, may be 45% or higher and 75% or lower, or may be 60% or higher and 70% or lower. That is, (the area of the space region R4)/(the area of the storage region R3) × 100 may be 30% or higher and 80% or lower, 45% or higher and 75% or lower, or 60% or higher and 70% or lower. In this manner, setting the voidage to 30% or higher and 80% or lower, preferably 45% or higher and 75% or lower, more preferably 60% or higher and 70% or lower can sufficiently secure the number of the plurality of hollow fiber membranes 31 stored in the housing 4 and the membrane area of the plurality of hollow fiber membranes 31, while reducing the pressure loss of the liquid L.

Since the baffle 6 of the degassing module 1 includes the inner baffle 61 disposed on the inner circumferential side of the pipe 2; and the outer baffle 62 disposed on the outer circumferential side of the pipe 2, the baffle 6 can be disposed without dividing the pipe 2 in the extending direction D.

In the degassing module 1, the entire region which excludes the plurality of hollow fiber membranes 31 and is between the pipe 2 and the housing 4 in the perpendicular section perpendicular to the extending direction D is filled with each of the first sealing unit 51 and the second sealing unit 52, and the plurality of holes 24 of the pipe 2 are formed between the first sealing unit 51 and the second sealing unit 52. Therefore, the region in the housing 4 can be partitioned into the internal region R1 and the external region R2 by the first sealing unit 51 and the second sealing unit 52. The first sealing unit 51 and the second sealing unit 52 are disposed at the first end 33 and the second end 34 of the hollow fiber membrane group 3 in the extending direction D, thus the liquid L can be brought into contact with the plurality of hollow fiber membranes 31 in a long range in the extending direction D.

In the degassing module 1, the first air intake port 42 and the second air intake port 43 are formed outward of the first sealing unit 51 and the second sealing unit 52 in the extending direction D, thus air can be sucked from the inner circumferential side space 32 of each of the plurality of hollow fiber membranes 31 through both ends of the plurality of hollow fiber membranes 31. Therefore, the degassing efficiency of the liquid L can be improved.

In the method of degassing liquid according to this embodiment, the liquid L is degassed using the degassing module 1 described above, thus the pressure loss of the liquid L can be reduced.

Although a preferred embodiment of an aspect of the present invention has been described above, the aspect of the present invention is not limited to the embodiment. For example, although the pipe and the housing have been described as separate members in the above embodiment, the pipe and the housing may be integrated if integration causes no problem in manufacturing.

### [Examples]

Next, Examples of an aspect of the present invention will be described; however, the aspect of the present invention is not limited to Examples below.

### (Comparative Example 1)

As Comparative Example 1, a degassing module was produced having the same configuration as that of the above-described embodiment except that the ratio of the diameter of each of the warps to the diameter of each of a plurality of hollow fiber membranes is set to 0.29. In the degassing module of Comparative Example 1, the diameter of each of the plurality of hollow fiber membranes was set to 210 um, and the diameter of each of the warps was set to 60 um (22 dtx), thus the ratio of the diameter of each of the warps to the diameter of each of the plurality of hollow fiber membranes was set to 0.29. Also, in the degassing module of Comparative Example 1, the pitch of the warps was set to 8.4 mm, thus the ratio of the pitch of the warps to the diameter of each of the plurality of hollow fiber membranes was set to 40 (40 times).

### (Example 1)

As Example 1, a degassing module was produced having the same configuration as that of Comparative Example 1 except that the ratio of the diameter of each of the warps to the diameter of each of a plurality of hollow fiber membranes is set to 0.71. In the degassing module of Example 1, the diameter of each of the plurality of hollow fiber membranes was set to 210 um, and the diameter of each of the warps was set to 150 um (56 dtx), thus the ratio of the diameter of each of the warps to the diameter of each of the plurality of hollow fiber membranes was set to 0.71. Also, in the degassing module of Example 1, the pitch of the warps was set to 8.4 mm, thus the ratio of the pitch of the warps to the diameter of each of the plurality of hollow fiber membranes was set to 40 (40 times).

### (Example 2)

As Example 2, a degassing module was produced having the same configuration as that of Example 1 except that the ratio of the pitch of the warps to the diameter of each of a plurality of hollow fiber membranes is set to 19 (19 times). In the degassing module of Example 2, the diameter of each of the plurality of hollow fiber membranes was set to 210 um, and the diameter of each of the warps was set to 150 um (56 dtx), thus the ratio of the diameter of each of the warps to the diameter of each of the plurality of hollow fiber membranes was set to 0.71. Also, in the degassing module of Example 2, the pitch of the warps was set to 4.2 mm, thus the ratio of the pitch of the warps to the diameter of each of the plurality of hollow fiber membranes was set to 19 (19 times).

### (Experiment 1)

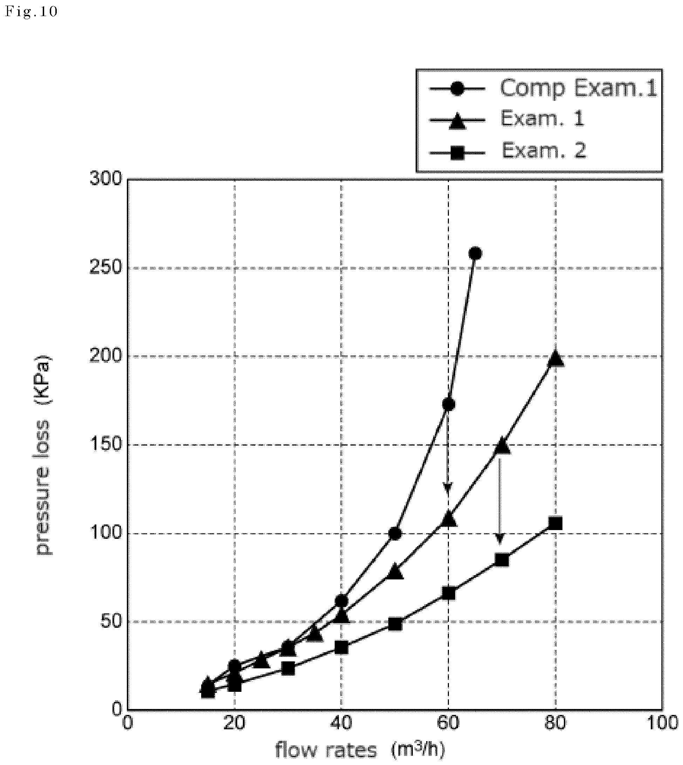

As Experiment 1, the pressure loss of liquid was measured using the degassing modules in Comparative Example 1, Example 1, and Example 2. In Experiment 1, the pressure loss of the liquid between the liquid supply port and the liquid discharge port of the degassing module was measured with varied flow rates of the liquid supplied to the degassing module. The result of measurement is shown in Fig. 10. Fig. 10 is a graph showing the result of measurement of the pressure loss.

As shown in Fig. 10, the pressure loss of liquid in the degassing module in which the ratio of the diameter of each of the warps to the diameter of each of the plurality of hollow fiber membranes is 0.71 is significantly smaller than the pressure loss of liquid in the degassing module in Comparative Example 1, in which the ratio of the diameter of each of the warps to the diameter of each of the plurality of hollow fiber membranes is 0.29. For example, when the flow rate of the liquid supplied to the degassing module is 60 m³/h, the pressure loss of liquid in the degassing module in Example 1 is reduced by 37% with respect to the pressure loss of liquid in the degassing module in Comparative Example 1.

Also, the pressure loss of liquid in the degassing module in Example 2, in which the ratio of the pitch of the warps to the diameter of each of the plurality of hollow fiber membranes is 19 is significantly smaller than the pressure loss of liquid in the degassing module in Example 1, in which the ratio of the pitch of the warps to the diameter of each of the plurality of hollow fiber membranes is 40. For example, when the flow rate of the liquid supplied to the degassing module is 70 m³/h, the pressure loss of liquid in the degassing module in Example 2 is reduced by 53% with respect to the pressure loss of liquid in the degassing module in Example 1.

### Industrial Applicability

An aspect of the present invention is applicable to a degassing module that degasses liquid and a method of degassing liquid.

### Reference Signs List

1 DEGASSING MODULE, 2 PIPE, 3 HOLLOW FIBER MEMBRANE GROUP, 4 HOUSING, 5 PARTITION UNIT, 6 BAFFLE, 8 HOLLOW FIBER MEMBRANE FABRIC, 8a FABRIC INNER SURFACE, 9 WARP, 10 UPSTREAM PART, 11 DOWNSTREAM PART, 12 DISC-SHAPED MEMBER, 13 MOLTEN RESIN, 21 LIQUID SUPPLY PORT, 22 LIQUID DISCHARGE PORT, 23 IN-PIPE FLOW PATH, 24 HOLE, 25 HOLE FORMATION PART, 26 FIRST HOLE NON-FORMATION PART, 27 SECOND HOLE NON-FORMATION PART, 31 HOLLOW FIBER MEMBRANE, 32 INNER CIRCUMFERENTIAL SIDE SPACE, 33 FIRST END, 34 SECOND END, 41 AIR INTAKE PORT, 42 FIRST AIR INTAKE PORT, 43 SECOND AIR INTAKE PORT, 51 FIRST SEALING UNIT, 52 SECOND SEALING UNIT, 61 INNER BAFFLE, 62 OUTER BAFFLE, A CENTRAL AXIS, C BAFFLE CLEARANCE, D EXTENDING DIRECTION, D1 DIAMETER, D2 DIAMETER, G GAS, L LIQUID, P PITCH, R1 INTERNAL REGION, R2 EXTERNAL REGION, R3 STORAGE REGION, R4 SPACE REGION, S1 INTER-MEMBRANE SPACE, S2 LIQUID FLOW SPACE, S3 PIPE-SIDE SPACE

## Claims

1. A degassing module comprising:
a pipe including an in-pipe flow path having a liquid supply port and a liquid discharge port, the pipe having a plurality of holes that allow the in-pipe flow path to be open;
a hollow fiber membrane group formed by winding hollow fiber membrane fabric around an outer circumferential side of the pipe so as to cover the plurality of holes, the hollow fiber membrane fabric having a plurality of hollow fiber membranes serving as wefts, and warps;
a housing connected to an outer circumferential surface of the pipe and configured to store the hollow fiber membrane group;
a partition unit configured to partition a region in the housing into an internal region including an inner circumferential side space of each of the plurality of hollow fiber membranes, and an external region including an inter-membrane space between the plurality of hollow fiber membranes;
an air intake port of the housing, the air intake port communicating with the internal region; and
a baffle configured to partition the in-pipe flow path and the inter-membrane space in an extending direction of the pipe,
wherein a ratio of a diameter of each of the warps to a diameter of each of the plurality of hollow fiber membranes is 0.6 or higher.

2. The degassing module according to Claim 1,
wherein the ratio of the diameter of each of the warps to the diameter of each of the plurality of hollow fiber membranes is 1.5 or lower.

3. The degassing module according to Claim 1 or 2,
wherein the diameter of each of the warps is 50 um or greater.

4. The degassing module according to any one of Claims 1 to 3,
wherein the diameter of each of the warps is 300 um or less.

5. The degassing module according to any one of Claims 1 to 4,
wherein the diameter of each of the plurality of hollow fiber membranes is 50 um or greater and 500 um or less.

6. The degassing module according to any one of Claims 1 to 5,
wherein a ratio of a pitch of the warps to the diameter of each of the plurality of hollow fiber membranes is 600 or lower.

7. The degassing module according to Claim 6,
wherein the ratio of the pitch of the warps to the diameter of each of the plurality of hollow fiber membranes is 2 or higher.

8. The degassing module according to any one of Claims 1 to 7,
wherein the pitch of the warps is 30 mm or less.

9. The degassing module according to any one of Claims 1 to 8,
wherein the pitch of the warps is 1 mm or greater.

10. The degassing module according to any one of Claims 1 to 9,
wherein, when a storage region is a region between the housing and the pipe in a perpendicular section perpendicular to the extending direction, and a space region is a region which excludes the plurality of hollow fiber membranes and is between the housing and the pipe in the perpendicular section, a voidage that is a ratio of an area of the space region to an area of the storage region is 30% or higher and 80% or lower.

11. The degassing module according to any one of Claims 1 to 10,
wherein the baffle includes:
an inner baffle disposed on an inner circumferential side of the pipe and configured to partition the in-pipe flow path in the extending direction; and
an outer baffle disposed on the outer circumferential side of the pipe and configured to partition the inter-membrane space in the extending direction.

12. The degassing module according to any one of Claims 1 to 11,
wherein the partition unit includes:
a first sealing unit disposed at a first end on one side of the hollow fiber membrane group in the extending direction; and
a second sealing unit disposed at a second end on an other side of the hollow fiber membrane group in the extending direction,
an entire region which excludes the plurality of hollow fiber membranes and is between the pipe and the housing in a perpendicular section perpendicular to the extending direction is filled with each of the first sealing unit and the second sealing unit, and
the plurality of holes of the pipe are formed between the first sealing unit and the second sealing unit in the extending direction.

13. The degassing module according to Claim 12,
wherein the air intake port includes:
a first air intake port formed on an opposite side of the second sealing unit with respect to the first sealing unit in the extending direction; and
a second air intake port formed on an opposite side of the first sealing unit with respect to the second sealing unit in the extending direction.

14. A method of degassing liquid, comprising:
in the degassing module according to any one of Claims 1 to 13, sucking air from the internal region through the air intake port, and supplying liquid from the liquid supply port to the in-pipe flow path.
